# EUROPÄISCHE PATENTANMELDUNG

(11) **EP 1 013 419 A1**
(43) Veröffentlichungstag der Anmeldung: **28.06.2000**
(21) Anmeldenummer: 99125648.8
(22) Anmeldetag: 22.12.1999
(51) Int. Cl.: B41F 33/00, G01N 21/89

(54) **Vorrichtung zur Erkennung von Bereichen unterschiedlich hoher Reflektionsfähigkeit auf Druckbahnen bzw. Druckbögen**

(30) Priorität: 22.12.1998 DE 19859512
(71) Anmelder: ELTROMAT GESELLSCHAFT FUR INDUSTRIE-ELEKTRONIK MBH, D-33818 Leopoldshöhe (DE)
(72) Erfinder: Stöber, Bernd, 33378 Rheda Weidenbrück (DE)
(74) Vertreter: Schmitz, Hans-Werner, Dipl.-Ing.

(57) **Zusammenfassung**

Die Erfindung betrifft eine Vorrichtung zur Erkennung von größeren Bereichen unterschiedlich hoher Reflektionsfähigkeit auf Druckbahnen oder Druckbögen. Um beispielsweise eine Lackerkennung bei Druckprodukten auszuführen, weist die erfindungsgemäße Vorrichtung (1) eine Lichtquelle (6) und eine Auswerteeinheit (2) auf. Zwischen diesen beiden Komponenten ist im Strahlengang des von der Lichtquelle (6) ausgesendeten Lichtes eine optische Abbildungsvorrichtung (8) derart angeordnet, daß die von der Lichtquelle ausgesandten divergierenden Strahlen von der Abbildungsvorrichtung (8) auf den abzutastenden Bereich gelenkt werden.

## Beschreibung

Die Erfindung betrifft eine Vorrichtung zur Erkennung von Bereichen unterschiedlich hoher Reflektionsfähigkeit auf Druckbahnen oder Druckbögen gemäß dem Oberbegriff des Anspruches 1. Ferner betrifft die Erfindung ein Verfahren gemäß Anspruch 10.

Eine dem Oberbegriff des Anspruchs 1 entsprechende Vorrichtung weist eine Lichtquelle auf, die eine auf ihre Druckqualität hin zu überprüfende Druckbahn beleuchtet. Das reflektierte Licht wird von einem Kameraobjektiv erfaßt, so daß durch Überprüfung des Kamerabildes die Druckgenauigkeit überwacht werden kann.

Unter anderem kann es sich bei der Bedruckung von Druckbahnen oder Druckbögen um einen Lackauftrag handeln. Lack weist im Gegensatz zur normalen Druckbahn eine sehr glatte Oberfläche auf. An dieser Oberfläche wird ein Teil des Lichtes ähnlich einem Spiegel gerichtet reflektiert. Der Untergrund und die Umgebung des Lackauftrages dagegen reflektieren ungerichtet, das heißt in einen großen Raumwinkelbereich.

Um eine Trennlinie zwischen einem Lackbereich und dem normalen Bahnuntergrund darstellen zu können, wird ein Kontrast benötigt. Im Rahmen der Erfindung durchgeführte Untersuchungen haben ergeben, daß zur Erzeugung eines Kontrastes Licht gerichtet auf die Oberfläche fallen muß, so daß der Glanz der Lackoberfläche direkt in das Kameraobjektiv fällt. Die rauhe Umgebung und der Lackuntergrund dagegen reflektiert nur einen geringeren Teil des Lichtes in das Objektiv. Insgesamt erscheint somit die Lackfläche etwas heller als die Umgebung.

Bei der gattungsgemäßen Vorrichtung besteht das Problem, daß diese Funktion nur aufrecht erhalten werden kann, wenn eine speziell angeordnete Punktlichtquelle einen Glanzpunkt erzeugt. Größere Bereiche können mit dieser Vorrichtung nicht bezüglich der Eigenschaft "Glanz" überwacht werden, da die kleine Lichtquelle nur die gerichtete Ausleuchtung eines kleinen nahezu punktförmigen Bereiches ermöglicht. Eine große Lichtquelle kann hier deshalb keine Abhilfe schaffen, weil mit einer großen Lichtquelle der erforderliche Kontrast nicht erzeugt werden kann, da die den Lack umgebenden ungerichtet reflektierenden Bereiche der Druckbahn, im Gegensatz zum Lack, Licht der gesamten Beleuchtungsfläche reflektieren und somit den erforderlichen Kontrast zur Überwachung bzw. Erkennung derart minimieren, daß der gewünschte Effekt nicht erzielbar ist.

Es ist daher Aufgabe der vorliegenden Erfindung, eine Vorrichtung zur Erkennung bzw. Überwachung von Bereichen unterschiedlich hoher Reflektionsfähigkeit, vorzugsweise auf Druckbahnen oder Druckbögen, der im Oberbegriff des Anspruchs 1 angegebenen Art zu schaffen, die es ermöglicht, auch einen größeren Bereich bei hohem Kontrast zwischen den Bereichen der unterschiedlich hohen Reflektionsfähigkeit zu überwachen bzw. zu erfassen.

Die Lösung dieser Aufgabe erfolgt durch die Merkmale des Anspruches 1.

Dadurch, daß im Strahlengang zwischen der Punkt-Lichtquelle und der Auswerteeinheit, die vorzugsweise als Kamera bzw. Videokamera ausgebildet ist, eine optische Abbildungsvorrichtung angeordnet ist, wird erreicht, daß die von der Lichtquelle ausgesendeten divergierenden Strahlen genau auf den Bereich der Druckbahn bzw. des Druckbogens gerichtet werden können, der überwacht werden soll. Die erfindungsgemäße Vorrichtung, die auch als Bahnbeobachtungssystem bezeichnet werden kann, weist den Vorteil auf, daß als Vorgabe für die Auslegung des gesamten Systems lediglich die Dimension des zu überwachenden Bereiches auf der Druckbahn bzw. dem Druckbogen erforderlich ist. Ausgehend von dieser Angabe kann durch Positionierung der Lichtquelle, des optischen Abbildungssystemes und der Kamera sowie durch die Bestimmung der Dimensionen der optischen Abbildungsvorrichtung und des Objektives der Auswerteeinheit das gesamte System eindeutig determiniert werden.

Somit kann beispielsweise bei Druckprodukten, die Bereiche unterschiedlich großer Reflektionsfähigkeit aufweisen, wie beispielsweise bei Druckprodukten mit Lackauftrag, die Erkennung dieser Bereiche auf den gesamten Bereich beispielsweise des von der Auswerteeinheit erzeugten Videobildes ausgedehnt werden. Somit ist es möglich, beispielsweise auch nicht homogenen Lackauftrag zusammenhängend und damit einfacher zu beurteilen.

Die Unteransprüche haben vorteilhafte Weiterbildungen der Erfindung zum Inhalt.

Als Lichtquelle können prinzipiell Punktlichtquellen Verwendung finden, die beispielsweise als Blitzlichtröhre oder auch als Konstantlichtquelle ausgebildet sein können.

Die Lichtquelle ist hierbei so anzuordnen, daß sie gegenüber der zu überwachenden Druckbahn abgeschirmt ist, so daß das von ihr ausgesendete Licht, das den zu überwachenden Bereich auf der Druckbahn beleuchten soll, immer zunächst auf die optische Abbildungsvorrichtung fällt und von dieser aus gerichtet auf exakt den Bereich geworfen wird, der abgetastet bzw. überwacht werden soll, und gleichzeitig für jede Stelle des abzutastenden Bereichs die Glanzbedingung bezüglich der Auwerteeinheit (Einfallswinkel = Ausfallswinkel) erfüllt wird.

Als Auswerteeinheit kann eine Kamera, insbesondere in Form einer Videokamera Verwendung finden. Grundsätzlich ist es auch möglich, mit dem erfindungsgemäßen System zwei Seiten einer nicht durchsichtigen Druckbahn zu überwachen, wobei eine Anordnung vorgesehen ist, die aus zwei erfindungsgemäßen Vorrichtungen besteht, die auf den beiden Seiten der Druckbahn angeordnet ist. Damit wird eine absolute Darstellung des Druckregisters von Vorder- zu Rückseite möglich, indem die Bildinformation zweier exakt gegenüberliegender Kameras elektronisch gemischt und auf einem Monitor dargestellt wird. Es ist selbstverständlich, daß die Auswerteeinheit neben dem Kameraobjektiv mit je nach Anwendungsfall angepaßter Optik alle weiteren erforderlichen Kamera- und Auswertekomponenten, vorzugsweise EDV-gesteuert bzw. geregelt, umfaßt.

Als optische Abbildungsvorrichtung können entweder Linsen bzw. Linsensysteme oder Spiegel bzw. Spiegelsysteme vorgesehen sein. Als Linsen werden vorzugsweise konvexe Linsen verwendet und als Spiegel sind vorzugsweise sphärische konkave Spiegel, (Hohlspiegel), vorgesehen.

In Anspruch 10 ist zudem ein erfindungsgemäßes Verfahren zur Erkennung bzw. Überwachung von Bereichen unterschiedlich hoher Reflektionsfähigkeiten auf Druckbahnen oder Druckbögen, allgemeiner auf Druckprodukten, definiert. Obwohl vorliegende Erfindung vor allem im Bereich der Drucktechnologie besondere Vorteile zeigt, können mit der erfindungsgemäßen Überwachungs- bzw. Beobachtungsvorrichtung grundsätzlich auch andere Flächen bzw. Objekte mit Bereichen unterschiedlich hoher Reflektionsfähigkeit untersucht bzw. beobachtet werden.

Nachfolgend werden weitere Einzelheiten, Merkmale und Vorteile der Erfindung anhand der Beschreibung eines Ausführungsbeispieles näher erläutert.

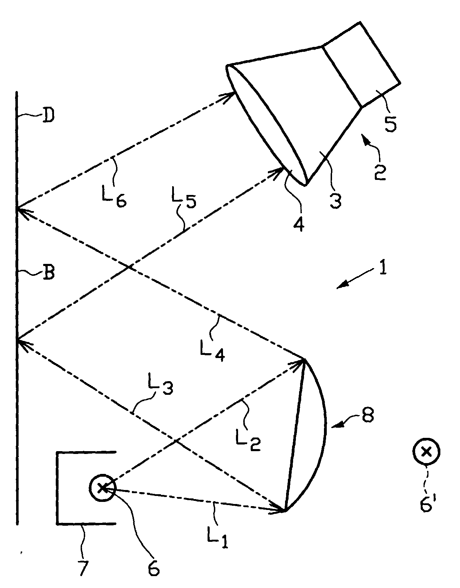

Die einzige Figur der Zeichnung zeigt eine schematisch stark vereinfachte Prinzipdarstellung einer erfindungsgemäßen Vorrichtung.

In der Figur ist die erfindungsgemäße Vorrichtung zur Erkennung von Bereichen unterschiedlich hoher Reflektionsfähigkeit auf Druckbahnen oder Druckbögen in ihrer Gesamtheit mit der Bezugsziffer 1 dargestellt. Die Vorrichtung 1 weist eine Auswerteeinheit 2 auf, die im Beispielsfalle als Videokamera dargestellt ist. Die Videokamera 2 umfaßt ein Objektiv 3 mit einer auf den jeweiligen Anwendungsfall angepaßten Optik 4. Das Objektiv 3 ist mit einem Auswerteblock 5 verbunden, der sämtliche elektronischen Komponenten zur Darstellung des mittels der Auswerteeinheit 2 erzeugten Videobildes aufweist.

Ferner ist eine Lichtquelle 6 vorgesehen, die als Punktlichtquelle (Blitzlichtröhre oder Konstantlichtquelle) ausgebildet sein kann. Die Lichtquelle 6 ist in einem Schirm 7 angeordnet, so daß von der Lichtquelle 6 aus keine Lichtstrahlen unmittelbar auf die zu überwachende Druckbahn D fallen können.

Im Strahlengang des von der Lichtquelle ausgesendeten Lichtes ist eine optische Abbildungsvorrichtung 8 angeordnet. Die Abbildungsvorrichtung 8 kann als Spiegel, insbesondere sphärischer Spiegel, oder als Linse ausgebildet sein. Der Strahlengang des von der Lichtquelle 6 ausgesendeten Lichtes ist in der Figur durch die Lichtstrahlenpaare L₁, L₂ bzw. L₃, L₄ bzw. L₅, L₆ symbolisiert. Die Lichtstrahlenpaare L₁ und L₂ werden von der Lichtquelle 6 auf die Abbildungsvorrichtung 8 geworfen und von dieser aus exakt auf den Bereich B gerichtet reflektiert, der den auf der Druckbahn liegenden zu überwachenden Bereich darstellt. Von Bereich B bzw. den innerhalb dieses Bereiches liegenden unterschiedlich hoch reflektierenden Unterbereichen werden die Lichtstrahlen L₅, L₆ aus reflektiert und vom Kameraobjektiv 3 eingefangen. Die Lichtstrahlen L₃ und L₄ bzw. L₅ und L₆ werden hierbei von glänzenden Stellen entsprechend dem optischen Prinzip Einfallswinkel = Ausfallswinkel von der Druckbahn D bzw. des zu überwachenden Bereiches B reflektiert. Ungerichtet reflektierende Bereiche sind nur in der Lage, einen Teil des gerichtet einfallenden Lichts Richtung Auswerteeinheit zu reflektieren und weisen dadurch zu glänzenden Stellen einen Kontrast auf.

Ist die optische Äbbildungsvorrichtung 8 als Linse ausgebildet, ist die Lichtquelle an einem Punkt angeordnet, der in der Figur mit 6' symbolisiert ist.

## Patentansprüche

1. Vorrichtung (1) zur Erkennung von Bereichen unterschiedlich hoher Reflektionsfähigkeit auf Druckbahnen oder Druckbögen
- mit einer Lichtquelle (6); und
- mit einer Auswerteeinheit (2),
- gekennzeichnet durch eine Abbildungsvorrichtung (8), die im Strahlengang des von der Lichtquelle (6) emittierten Lichtes (L₁, L₂, L₃, L₄, L₅, L₆) zwischen der Lichtquelle (6) und der Auswerteeinheit (2) angeordnet ist.

2. Vorrichtung nach Anspruch 1, dadurch gekennzeichnet, daß die Lichtquelle (6) eine Punktlichtquelle ist.

3. Vorrichtung nach Anspruch 1 oder 2, dadurch gekennzeichnet, daß die Lichtquelle eine Blitzlichtquelle ist.

4. Vorrichtung nach Anspruch 1 oder 2, dadurch gekennzeichnet, daß die Lichtquelle eine Konstantlichtquelle ist.

5. Vorrichtung nach einem der Ansprüche 1 bis 4, dadurch gekennzeichnet, daß die Auswerteeinheit (2) eine Kamera, insbesondere eine Videokamera ist.

6. Vorrichtung nach einem der Ansprüche 1 bis 5, dadurch gekennzeichnet, daß die Abbildungsvorrichtung (8) ein Spiegel ist.

7. Vorrichtung nach Anspruch 6, dadurch gekennzeichnet, daß der Spiegel als sphärischer Hohlspiegel ausgebildet ist.

8. Vorrichtung nach einem der Ansprüche 1 bis 5, dadurch gekennzeichnet, daß die Abbildungsvorrichtung (8) eine Linse bzw. ein Linsensystem ist.

9. Vorrichtung nach Anspruch 8, dadurch gekennzeichnet, daß die Linse als konvexe Linse ausgebildet ist.

10. Verfahren zur Erkennung von Bereichen unterschiedlich hoher Reflektionsfähigkeit auf Druckbahnen oder Druckbögen mit folgenden Verfahrensschritten:
- Aussenden von divergierenden Lichtstrahlen;
- Bündeln eines Teiles der divergierenden Lichtstrahlen auf den abzutastenden Bereich der Druckbahn bzw. des Druckbogens entsprechend der Größe des abzutastenden Bereiches derart, daß die von der Oberfläche des abzutastenden Bereiches (gerichtet) reflektierten Lichtstrahlen auf eine Auswerteeinheit gelenkt werden.
